# FASCICULE DE BREVET EUROPEEN

(11) **EP 2 942 135 B1**
(45) Date de publication et mention de la délivrance du brevet: **29.11.2023**
(21) Numéro de dépôt: 14305671.1
(22) Date de dépôt: 07.05.2014
(51) Int. Cl.: B23B 35/00, B23B 51/00

(54) **Procédé de perçage d'un empilage de matériaux, et dispositif de perçage**
Verfahren zum Bohren eines Materialstapels, und Bohrvorrichtung
Method for drilling a stack of materials, and drilling device

(43) Date de publication de la demande: 11.11.2015
(73) Titulaire: AIRBUS (SAS), 31700 Blagnac (FR)
(72) Inventeur: Vinhas, Fernand, 78100 SAINT GERMAIN EN LAYE (FR); Aliaga, Daniel, 93300 AUBERVILLIERS (FR); Abrivard, Guillaume, 80000 AMIENS (FR); Schuster, Dominique, 78100 SAINT GERMAIN EN LAYE (FR)
(74) Mandataire: Jardel, Marc Henry Philippe

(56) Documents cités:
- EP-A1- 1 992 437
- EP-A1- 2 529 867
- WO-A1-01/23127
- FR-A1- 2 403 712
- US-A- 1 407 546
- US-A- 5 038 642

## Description

L'invention appartient au domaine des matériaux utilisés dans la réalisation d'assemblage et en particulier du perçage des matériaux.

Plus particulièrement l'invention concerne un procédé et un dispositif de perçage pour réaliser des perçages dans un empilage de matériaux de caractéristiques différentes.

Dans le domaine des structures ou dans le domaine de la mécanique en général, il est connu d'assembler plusieurs pièces par le moyen de fixations, rivets ou boulons par exemple, passant dans un trou préalablement réalisé et traversant les pièces à assembler.

Dans de nombreux cas il est nécessaire pour obtenir un alignement parfait du trou traversant les différentes pièces de réaliser le trou dans les différentes pièces lorsque celles-ci sont dans leur position relative qu'elles doivent occuper dans d'assemblage.

Lorsque les différentes pièces sont constituées de matériaux de même nature, un alliage métallique tel qu'un acier ou un alliage d'aluminium par exemple, le perçage ne pose pas de problème particulier pour le choix d'un outil coupant pour réaliser le perçage, l'homme du métier utilisant ses connaissances du perçage d'un matériau homogène.

Lorsque les pièces forment un empilage de matériau différent, il n'est généralement pas possible de réaliser simplement un perçage de qualité avec un même outil et ou avec les mêmes paramètres de coupe.

Dans ce cas, qui se présente par exemple lors du perçage d'un empilage d'une pièce métallique et d'une pièce en matériau composite, il est connu d'utiliser un outil considéré compatible des deux matériaux et de faire varier les paramètres de coupe, vitesse de rotation du foret et avance, suivant le matériau en cours de perçage.

Cette solution présente cependant l'inconvénient de ne pas être possible pour tous les couples de matériaux rencontrés dans l'industrie et, lorsque qu'il peut être utilisé un outil compatible des deux matériaux, ce choix est souvent le fruit d'un compromis sur les conditions de perçage et conduit à des endommagements rapides des outils du fait de leurs conditions de mise en oeuvre. Il en résulte des perçages dont la qualité, en particulier les états de surface du trou, est inférieure à celle obtenue avec le perçage par des outils optimisés.

Il est également connu de percer chaque couche avec un foret adapté, ce qui nécessite de réaliser le perçage en plusieurs fois en changeant l'outil de perçage à chaque changement du matériau traversé.

Cette solution conduit à des temps de mise en oeuvre augmentés et les arrêts et reprises de perçage après chaque changement d'outil peuvent conduire à des défauts d'alignement et à des défauts d'état de surface du perçage.

Ces solutions connues sont d'autant plus difficiles à mettre en oeuvre que les différents matériaux traversés sont des matériaux relativement incompatibles par leurs exigences de perçage du fait de leurs caractéristiques intrinsèques, par exemple dans le cas d'un empilage comportant une pièce réalisée dans un alliage de titane et une pièce réalisée dans un matériau composite à fibres de carbone.

FR 2 403 712 A1 divulgue un dispositif de perçage selon le préambule de la revendication 1 et un procédé de perçage selon le préambule de la revendication 10.

La présente invention apporte une solution au dispositif et procédés connus par la possibilité de réaliser un trou dans un empilage de matériaux différents avec un moyen unique en une seule opération de perçage.

Suivant l'invention, le dispositif de perçage est selon la revendication 1, il comporte des moyens d'entraînement en rotation d'un porte outil autour d'un premier axe sur lequel porte outil est fixé un foret.

Le foret comporte un axe et comporte au moins une première arête de coupe et une seconde arête de coupe inclinées dans un plan axial du foret de sorte à conférer au foret une forme d'extrémité conique saillante.

En outre :
- la première arête de coupe est constituée pour le perçage d'un premier matériau ;
- la seconde arête de coupe est constituée, différemment de la première arête de coupe pour le perçage du second matériau ;
- le porte outil peut maintenir l'axe du foret sur un second axe du porte outil parallèle au premier axe à une distance de déport D dudit premier axe, ledit foret étant fixé audit porte outil pour être entraîné en rotation à la vitesse de rotation dudit porte outil ;
- le porte outil et le foret comportent au moins deux positions distinctes du premier axe par rapport à l'axe du foret pour déporter latéralement le premier axe par rapport à l'axe du foret dans une direction opposée à la première arête de coupe dans une première position et pour déporter latéralement le premier axe par rapport à l'axe du foret dans une direction opposée à la seconde arête de coupe dans une deuxième position.

Le dispositif de perçage permet ainsi, au cours d'un perçage dans un empilement de matériaux aux caractéristiques d'usinage différentes, de faire travailler indépendamment et alternativement deux arêtes de coupe, ayant des caractéristiques différentes, d'un même foret pour optimiser les conditions de perçage dans chacun des matériaux percés et éviter un endommagement rapide de l'outil et améliorer la qualité du trou réalisé.

Dans une forme avantageuse de réalisation du dispositif de perçage, la première arête de coupe et la seconde arête de coupe sont inclinées dans un plan axial du foret pour former chacune avec l'axe du foret un angle compris entre 60 degrés et 45 degrés environ.

La forme en cône saillant obtenue permet avec un déport latéral modéré de maintenir une avance satisfaisante du foret pendant le perçage en assurant la condition que seule une arête de coupe voulue enlève de la matière pendant le perçage à un moment donné.

Dans une forme avantageuse de réalisation du dispositif de perçage, chacune des au moins deux positions distinctes du premier axe par rapport à l'axe du foret correspond à un déport du premier axe compris entre 0,05 mm et 0,2 mm.

Un tel déport d'axe, tout en étant compatible d'une avance de perçage réaliste, permet de limiter les efforts transversaux sur le foret et permet de maintenir le foret dans des conditions de perçage satisfaisantes.

Dans une forme de réalisation du dispositif de perçage, la première arête de coupe est adaptée au perçage de métaux durs.

La première arête de coupe est formée, dans un mode de réalisation, dans un carbure de tungstène adapté au perçage des alliages à base de titane.

Dans une forme de réalisation du dispositif de perçage, la deuxième arête de coupe est adaptée au perçage de matériaux abrasifs.

La deuxième arête de coupe est formée, dans un mode de réalisation, dans un carbure de tungstène comportant du diamant, ou formée par une plaquette diamant rapportée sur l'outil, adapté au perçage des matériaux composites comportant des fibres de carbone.

Il est dans ces cas obtenu un dispositif de perçage capable de réaliser un perçage d'un empilement de matériaux, qui dans le cas général nécessitent individuellement des forets de caractéristiques différentes sauf à réaliser, avec des arêtes de coupe de l'outil optimisées pour chacun des matériaux traversés successivement pendant le perçage.

Dans une forme de réalisation du dispositif de perçage, le foret comporte trois ou quatre arêtes de coupe et, le porte outil et le foret comportent des positions distinctes du premier axe par rapport à l'axe du foret pour déporter latéralement le premier axe par rapport à l'axe du foret dans chacune des directions opposées aux directions de chacune des arêtes de coupe.

Il est ainsi obtenu au cours d'un même perçage de pouvoir faire travailler indépendamment et successivement trois ou quatre arêtes de coupe différentes pour percer un trou dans un empilage de matériau pouvant contenir jusqu'à trois ou quatre matériaux différent pour lesquels des caractéristiques d'arête de coupe souhaitables sont différentes.

Dans une forme de réalisation du dispositif de perçage, le porte outil comporte un fourreau tournant à trou excentré, mobile en rotation sur le porte outil autour du premier axe, dans lequel fourreau le forêt est maintenu avec l'axe du foret sur un second axe du fourreau tournant, le second axe étant déporté par rapport au premier axe de sorte qu'une rotation contrôlée du fourreau tournant dans un fût du porte outil modifie la direction, dans un repère lié au foret, dans laquelle le premier axe est déporté par rapport à l'axe du foret.

Il est ainsi obtenu simplement une modification du déport recherché, la rotation du fourreau dans un mode de réalisation pouvant résulter d'une inversion du sens de rotation du perçage ou de l'action de moyens élastiques sensible au couple exercé sur le foret lors de l'usinage.

L'invention concerne également un procédé de perçage d'un assemblage de pièces formant un empilage d'au moins deux matériaux, ayant des caractéristiques physiques nécessitant des conditions de perçage différentes, selon la revendication 10.

Le procédé met en oeuvre un foret avec un axe, ledit foret comportant au moins une première arête de coupe et une seconde arête de coupe inclinées dans un plan axial du foret de sorte à conférer au foret en rotation autour de son axe une forme d'extrémité conique saillante.

Suivant le procédé :
- la première arête de coupe est constituée pour le perçage d'un premier matériau ;
- la seconde arête de coupe est constituée, différemment de la première arête de coupe, pour le perçage du second matériau ;
et :
- un premier axe d'entraînement en rotation du foret pendant le perçage est placé et maintenu déporté latéralement d'une distance de déport D par rapport à l'axe du foret ;
- le premier axe est déporté de la distance de déport D par rapport à l'axe du foret dans une direction opposée à la première arête de coupe lorsque le foret perce le premier matériau et alternativement ;
- le premier axe est déporté de la distance de déport D par rapport à l'axe du foret dans une direction opposée à la seconde arête de coupe lorsque le foret perce le deuxième matériau.

Ainsi, suivant le procédé il est obtenu de percer un empilage de différents matériaux ayant des exigences de perçage différentes en une passe et avec un seul foret satisfaisant alternativement aux exigences du perçage des différents matériaux.

Suivant un mode de mise en oeuvre du procédé de perçage, une avance, c'est-à-dire la progression du foret par tour suivant la direction axiale du perçage, est limitée en fonction d'un angle formé par chaque arête de coupe par rapport à l'axe du foret et de la distance de déport D de sorte qu'à un instant donné une seule arête de coupe procède à un enlèvement de matière pendant le perçage.

Il est ainsi évité qu'une arête de coupe constituée pour le perçage d'un matériau ne participe au perçage d'un autre matériau en maintenant cette arête de coupe en arrière de l'arête en cours de réalisation du perçage.

Dans un mode de mise en oeuvre du procédé de perçage, les paramètres de coupe, par exemple vitesse de rotation et avance du foret, sont modifiées lorsque la direction du déport D est modifiée pendant le perçage.

Il est ainsi optimisé le travail de chaque arête de coupe dans le matériau qu'elle perce.

Dans une forme de mise en oeuvre du procédé de perçage, les au moins une première arête de coupe et une seconde arête de coupe sont agencées sur le foret pour réaliser un enlèvement de matière avec des sens de rotation inversés du foret, et le sens de rotation est inversé pendant le perçage en fonction de l'arête de coupe devant percer un matériau de l'empilage.

Dans ce cas le changement de matériau percé dans l'empilage est accompagné d'une inversion du sens de rotation du foret qui avantageusement déclenche le changement du déport de l'axe du foret pour modifier l'arête de coupe réalisant le perçage.

Dans un mode de mise en oeuvre du procédé de perçage, la direction dans laquelle le premier axe est déporté de la distance de déport D par rapport à l'axe du foret est déclenchée par une mesure de profondeur du perçage en cours.

Il est ainsi détecté par des moyens de mesure géométrique, par la connaissance des épaisseurs des matériaux percés, un changement précis de la direction du déport d'axe.

Dans un mode de mise en oeuvre du procédé de perçage, la direction dans laquelle le premier axe est déporté de la distance de déport D par rapport à l'axe du foret est déclenchée par une mesure d'un effort sur le foret, par exemple un couple ou une puissance absorbée par un dispositif de perçage, pendant le perçage.

Il est ainsi mis en oeuvre une méthode de changement de la direction du déport d'axe qui exploite des propriétés des matériaux percés et qui peut s'affranchir des connaissances exactes des épaisseurs percées.

La description et les dessins d'un exemple de réalisation et de mise en oeuvre de l'invention, permettront de mieux comprendre les buts et avantages de l'invention. Il est clair que cette description est donnée à titre d'exemple, et n'a pas de caractère limitatif.

Dans les dessins :
- la figure 1 illustre schématiquement un assemblage de deux pièces constituées de différents matériaux formant un empilage hétérogène dans lequel doit être réalisé un perçage. ;
- la figure 2 représente un exemple de foret utilisé dans l'invention, à goujures droites dans cet exemple, le détail (a) montrant un agrandissement de l'extrémité du foret et des arêtes de coupe, le détail (b) correspondant à une section du corps du foret ;
- la figure 3a représente schématiquement en vue de profil un foret de perçage dans les conditions du perçage par une première arête de coupe par un déport de l'axe de perçage par rapport à l'axe du foret, et en vue de dessus le foret superposé à une trace du trou réalisé ;
- la figure 3b représente schématiquement, de manière similaire à la figure 3a, en vue de profil le foret de perçage dans les conditions du perçage par une deuxième arête de coupe et en vue de dessus le foret superposé à une trace du trou réalisé, le changement d'arête de coupe par rapport à la figure 3a étant le résultat du changement du sens du déport ;
- la figure 4 illustre schématiquement l'extrémité du foret et les possibilités d'avance de l'outil en fonction du déport de l'axe de rotation ;
- la figure 5 illustre en section, suivant un plan longitudinal axial et suivant un plan perpendiculaire à l'axe de l'outil, u exemple de porte outil mettant en oeuvre un fourreau excentré dans lequel est fixé le foret pour modifier le sens du déport de l'axe de rotation par rotation du fourreau dans le porte outil, dans le cas illustré la rotation étant entraînée par un changement du sens de rotation du porte outil ;
- la figure 6 présente un schéma synoptique du procédé de l'invention.

Sur les dessins des parties représentant des éléments ayant la même fonction, même de formes différentes, sont identifiées par la même référence.

Les éléments représentés sur les différentes figures et les différents éléments d'une même figure ne sont pas nécessairement représentés à l'échelle. En particulier le déport des axes illustré est fortement agrandi par rapport aux autres éléments dessinés pour la clarté des illustrations.

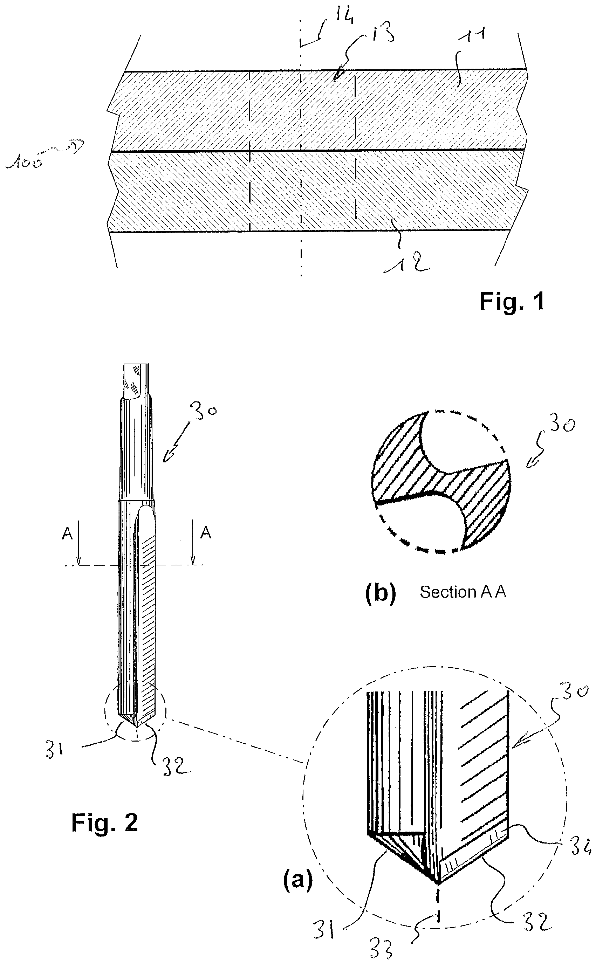

La figure 1 présente de manière schématique, suivant une coupe transversale, un assemblage 100 de deux pièces, une première pièce 11 et une seconde pièce 12, constituées de deux matériaux différents.

En pratique, dans cet exemple, l'assemblage peut comporter plus de deux pièces traversées par un perçage, sous réserve que toutes les pièces soient constituées d'un matériau ayant des propriétés d'usinage similaires à l'une de deux familles homogènes de matériaux de l'empilage formé par l'assemblage.

Il faut comprendre que lorsqu'il est considéré deux matériaux différents ou appartenant à des familles différentes, il ne doit être, dans le contexte de l'invention, considéré que le comportement des matériaux par rapport à des outils de perçage utilisés.

Ainsi deux matériaux peuvent être différent en regard de leurs classifications ordinaires mais avoir des comportements similaires vis à vis de moyens d'usinage. Par exemple deux aciers de nuances différentes, qui sont donc deux matériaux intrinsèquement différents, seront considérés similaires dans le contexte de l'invention si leur perçage est réalisé ordinairement avec les mêmes outils, le cas échéant en adaptant une vitesse de coupe.

Afin d'illustrer un mode de réalisation de l'invention, il sera considéré que, dans l'assemblage 100 de la figure 1, la première pièce 11 est formée, dans la zone du perçage 13 à réaliser, dans un alliage de titane et que la seconde pièce 12 est formée en matériau composite à fibres de carbone.

Dans la suite de la description pour cet exemple, la première pièce 11 sera également désignée pièce titane et la seconde pièce 12 sera également désignée par pièce carbone.

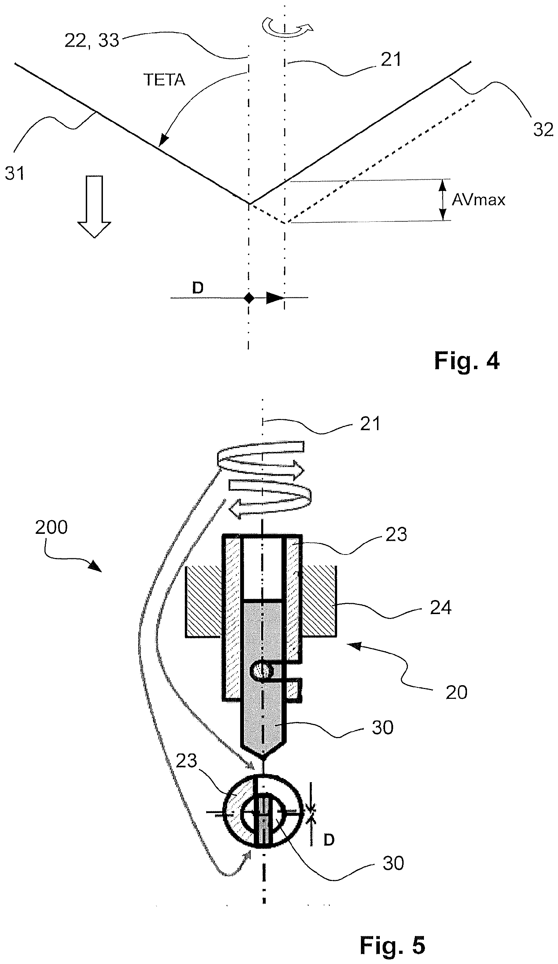

Le dispositif de perçage 200 de l'invention, tel que schématisé dans un exemple de réalisation sur la figure 5, comporte un porte outil 20 et un foret 30.

Le porte outil 20 est un élément mécanique de liaison entre des moyens d'entraînement en rotation, non représenté, par exemple une unité de perçage automatisée qui apporte la puissance nécessaire à l'entraînement en rotation du foret et assure une avance du foret pendant le perçage, et le foret 30 réalisant le perçage des matériaux.

Le porte outil 20 comporte un premier axe 21 longitudinal autour duquel ledit porte outil est entraîné en rotation par la machine d'entraînement.

Le porte outil 20 comporte un second axe 22 longitudinal, parallèle au premier axe 21 et décalé latéralement par rapport audit premier axe, confondu avec un axe 33 du foret 30 lorsque le foret est fixé au porte outil, pour former un déport latéral D dudit premier axe par rapport audit second axe, ou audit axe du foret.

En outre, le porte outil comporte des moyens pour réaliser le déport latéral D modifiable pour permettre audit premier axe d'être déporté latéralement d'un côté ou de l'autre dudit second axe, le déport latéral étant ici considéré dans un repère lié au foret et tournant avec ledit foret.

Le déport latéral **D**, lorsque des opérations de perçage sont en cours, est en pratique petit devant un diamètre du foret 30, en pratique le déport latéral D est compris de préférence entre 0,05 mm et 0,2 mm, par exemple 0,1 mm. Le choix de valeurs admissibles pour ce déport latéral D sera également compris à la description du procédé de l'invention.

Le foret 30, dans l'exemple de réalisation illustré, est un foret comportant deux arêtes de coupe, placée de manière conventionnelle pour un foret à deux arêtes de coupe sensiblement axisymétriques par rapport à l'axe 33 du foret.

Suivant l'invention, les deux arêtes de coupe ont des propriétés adaptées à des caractéristiques d'usinage différentes.

Une première arête de coupe 31 est, dans l'exemple de réalisation, adaptée à l'usinage des alliages de titane.

Par exemple la première arête de coupe 31 est formée dans un carbure de tungstène.

La deuxième arête de coupe 32 est adaptée à l'usinage des composites à fibres de carbone, dont les propriétés abrasives sont bien connues.

Par exemple la deuxième arête de coupe 32 est formée par un carbure de tungstène revêtu de diamant ou par une plaquette diamant rapportée sur le foret 30.

Dans une forme de réalisation, le foret 30 est réalisé en carbure de tungstène de manière conventionnelle, de sorte que la première arête de coupe 31 est formée par le corps dudit foret, et une plaquette diamant 34 est rapportée, par exemple brasée, sur ledit foret pour former la deuxième arête de coupe 32.

Lorsque le foret 30 est fixé au porte outil 20, les directions dans lesquelles peut être déporté le premier axe 21 par rapport à l'axe 33 du foret, confondu avec le second axe 22, correspondent sensiblement avec celles déterminées par la première arête de coupe 31 et la deuxième arête de coupe 32.

Dans une forme de réalisation, le porte outil 20 et le foret 30 comportent des moyens, complémentaires, qui coopèrent pour permettre des positionnements relatifs dudit porte outil et dudit foret dans la position permettant de faire coïncider les directions de déport avec celles des arêtes de coupe et également pour assurer le maintien de ce positionnement lors des opérations de perçage.

Il doit être compris que, dans le contexte de l'invention, le déport d'axe est, pour une position de perçage donnée, fixe dans un repère lié au foret 30, ce qui correspond également à considérer que le foret 30 tourne, dans un repère fixe par rapport aux pièces 11, 12 à percer, autour de son axe 33 à la même vitesse de rotation que le porte outil 20 autour du premier axe 21.

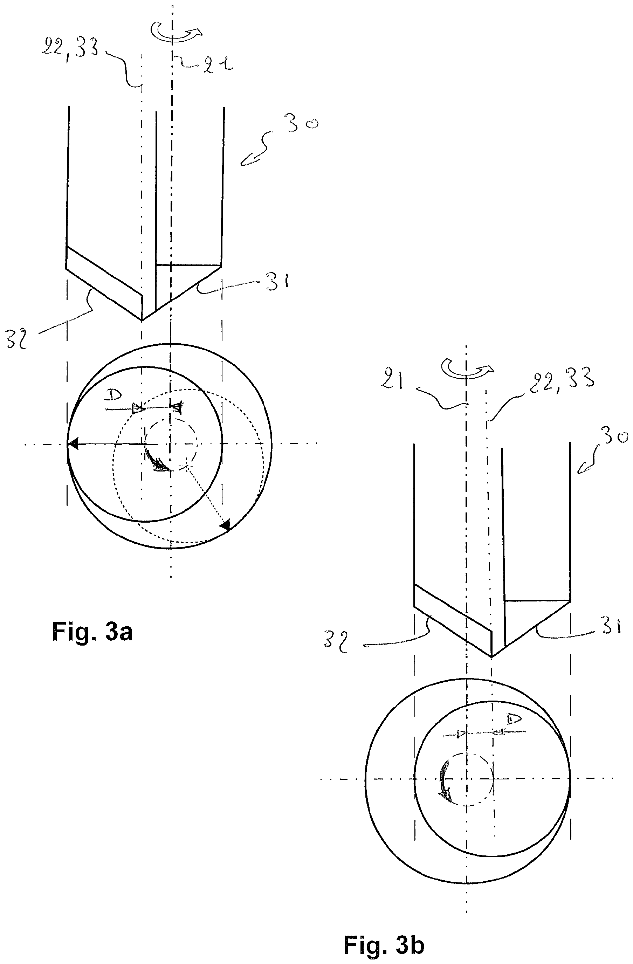

En conséquence de cet entraînement en rotation du foret 30, il doit être noté qu'un diamètre du trou réalisé est supérieur à un diamètre de perçage dudit foret de deux fois la valeur du déport latéral **D**, comme l'illustrent les figures 3a et 3b.

En outre les arêtes de coupes 31, 32 sont inclinées dans un plan axial du foret 30 de sorte à former une forme d'extrémité dudit foret conique saillante, comme visible sur les différentes figures, de demi-angle au sommet "téta" compris entre 60 degrés et 45 degrés environ.

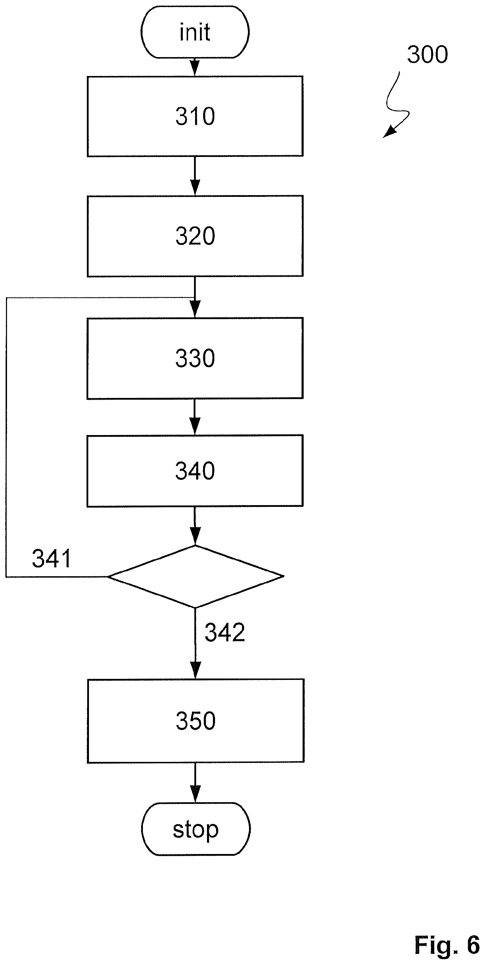

Pour réaliser un trou dans l'assemblage 100 suivant un procédé 300 de l'invention, dont un schéma synoptique est donné sur la figure 6, dans une phase d'initialisation, le dispositif de perçage étant positionné pour placer le premier axe 21 du porte outil 20 confondu avec un axe 14 du trou à réaliser, il est procédé au perçage.

Dans une première étape 310, il est placé l'axe 33 du foret 30, maintenu dans le porte outil 20, de sorte que le premier axe 21 de rotation dudit porte outil se trouve déporté par rapport audit axe du foret du coté opposé à l'arête de coupe correspondant au premier matériau devant être percé. Pour la simplicité de l'exposé il sera considéré que le premier matériau constitutif de la première pièce 13 de l'assemblage est celui pour lequel la première arête de coupe 31 est adaptée au perçage.

Le déport latéral **D** du premier axe 21 par rapport à l'axe 33 du foret, comme illustré sur la figure 3a, est obtenu par un réglage du porte outil pour que le second axe 22 du porte outil, avec lequel l'axe 33 du foret est confondu, soit lui même décalé dans le sens relatif et avec l'amplitude voulue.

Dans une deuxième étape 320 le dispositif de perçage est engagé avec les paramètres de coupe, en particulier vitesse de rotation et avance du foret, définis pour percer la première pièce 11 formée du premier matériau avec le foret dont seule la première arête de coupe 31 est engagée dans le matériau, par exemple la pièce titane, du fait de la forme de l'extrémité du foret et du déport latéral de son axe 33.

Le travail de la seule première arête de coupe 31, du fait du déport latéral de l'axe du foret, résulte du fait que, dans un repère lié à l'assemblage 100 en cours de perçage, ladite première arête de coupe est virtuellement située devant, dans le sens de l'avance du foret, la deuxième arête de coupe 32 située du côté opposé de l'axe du foret, comme l'illustre la figure 4.

Sur cette figure 4, le trait discontinu représente la trace du cône décrit par la première arête de coupe 31 en rotation autour du premier axe 21 du porte outil.

Cette même figure 4 illustre également que la deuxième arête de coupe 32 se trouve en arrière de la première arête de coupe 31, suivant le sens de l'avance du foret, matérialisé sur le dessin par une flèche orientée vers le bas, et que lors de la rotation du foret 30, ladite deuxième arête n'est pas en contact avec le matériau de la première pièce 11, la matière ayant été retiré par le passage de ladite première arête de coupe en rotation simultanée.

Il convient de noter que cette configuration, qui protège la seconde arête de coupe 32, qui n'est pas adaptée à l'usinage du second matériau, est respectée pour autant qu'une avance du foret soit suffisamment faible.

Il est donc nécessaire que l'avance par tour de foret soit inférieure à une valeur **Avmax = 2 × D / tangente(téta),** formule dans laquelle téta représente le demi-angle au sommet du cône formé par les arêtes de coupe. Il est donc par ce fait déterminable des limites pratiques à la valeur du demi-angle au sommet téta qui, au moins en valeur supérieure, ne doit pas être trop près de 90 degrés pour conserver une avance compatible avec la réalisation du perçage.

Il peut également être remarqué qu'une zone centrale du perçage, de diamètre égal à deux fois le déport D, n'est pas soumise à l'usinage par la première arête de coupe 31. Il se forme donc théoriquement un pion central lors du perçage. Toutefois ce pion central dont le diamètre est petit, de l'ordre du dixième de millimètre en pratique, qui de surcroît se situe dans une zone du perçage où les vitesses de coupe sont quasiment nulles, ne perturbe pas le procédé, ledit pion étant détruit sans conséquence lors de l'avance par la seconde arête de coupe 32.

Dans une troisième étape 330, lorsque l'extrémité du foret 30 a traversé la première pièce 11, l'axe 33 du foret 30, toujours maintenu dans le porte outil 20, est déplacé de sorte que le premier axe 21 de rotation du porte outil 20 se trouve déporté latéralement par rapport audit axe du foret du coté opposé à la deuxième arête de coupe 32 correspondant au second matériau devant être percé, c'est à dire le matériau de la seconde pièce 12 de l'assemblage, par exemple la pièce carbone, pour lequel la deuxième arête de coupe 32 est adaptée au perçage.

L'axe 33 du foret est déporté, comme illustré sur la figure 3b, par un réglage du porte outil pour que le second axe 22 du porte outil, avec lequel l'axe du foret est confondu, soit lui-même décalé dans le sens et avec l'amplitude voulue, dans cet exemple vers la seconde arête de coupe 32.

Dans une quatrième étape 340 le perçage est poursuivi avec les paramètres de coupe, en particulier vitesse de rotation et avance du foret, définis pour percer le second matériau avec le foret dont seule la seconde arête de coupe 32 est engagée dans le matériau, situation qui résulte des mêmes phénomènes que ceux expliqués pour le perçage de la première pièce, le rôle des première arête de coupe et seconde arête de coupe étant inversés.

Si l'assemblage comporte plus de deux pièces formant un empilage de matériaux nécessitant des changements successifs de conditions de coupe, par exemple une alternance de pièces titanes et de pièces composites avec plus de deux pièces, les troisième étape 330 et quatrième étape 340 sont reprises 341 jusqu'à avoir réalisé 342 le perçage voulu.

Dans une cinquième étape 350, lorsque le trou a été réalisé, le foret 30 est dégagé de l'assemblage 100.

Il doit être remarqué que l'application du procédé dans le cas d'un assemblage de deux ou plus pièces doit être considéré dans un sens large comme le cas d'un empilage de parties en matériaux différents qui, dans certains contextes, pourraient être considérées comme faisant partie d'une même pièce.

Par exemple une pièce peut être le résultat, localement, d'une succession de couches assemblées par exemple par collage formées dans différents matériaux.

Par exemple un empilage de matériaux différents peut résulter d'un insert métallique, par exemple une ferrure en titane, placée dans une pièce en matériau composite, par exemple une pièce en carbone, ou encore d'un insert en matériau céramique placé dans une pièce métallique.

Il doit être noté que dans un mode de mise en oeuvre, de manière avantageuse les changements de position de l'axe du foret sont réalisés automatiquement pendant une opération de perçage par le dispositif de perçage.

Dans un mode de fonctionnement, les changements sont réalisés en fonction d'un enfoncement mesuré ou estimé du foret 30 dans l'assemblage. Pour un perçage donné, les épaisseurs des pièces traversées sont connues, par exemple transmis par des données numériques de modèles des pièces assemblées au dispositif de perçage, et la mesure de l'enfoncement du foret dans l'assemblage par un capteur de position, transmise à des moyens de contrôle dudit dispositif de perçage, déclenche les changements de direction du déport latéral entre le premier axe 21 et l'axe 33 du foret et des paramètres de coupe lorsque l'enfoncement mesuré coïncide avec une interface entre deux matériaux de caractéristiques différentes.

Dans un autre mode de fonctionnement, une mesure d'un couple d'usinage est réalisée pendant le perçage. Lorsqu'un changement de matériau se traduit par une modification mesurable du couple d'usinage, un changement du couple d'usinage mesuré est alors interprété comme un changement du matériau en cours de perçage et les changements de déport latéral entre le premier axe 21 et l'axe 33 du foret et des paramètres d'usinage sont réalisés par le dispositif de perçage pour poursuivre le perçage.

Suivant le procédé de l'invention et en mettant en oeuvre le dispositif de perçage de l'invention, il peut être réalisé un perçage en une seule passe et avec un seul foret dans un assemblage formé d'un empilage de pièces comportant des matériaux présentant des contraintes d'usinage très différentes.

Par exemple le perçage d'un empilage de pièces en alliage de titane et de pièces en matériau composite carbone peut être réalisé avec un foret dont une arête de coupe en carbure, adaptée au perçage du titane, n'est pas soumise à l'abrasion intensive du perçage dans le matériau composite carbone et dont une arête de coupe avec une plaquette diamant, adaptée au perçage du composite carbone, n'est pas soumise à l'échauffement intensif qui serait subit dans le perçage du titane et qui conduirait à une détérioration rapide de l'outil par la transformation du diamant en graphite.

La modification du déport latéral entre l'axe de rotation 21 du porte outil 20 et l'axe 33 du foret peut être réalisée par tout système de déplacement de l'axe du foret dans le porte outil.

Le déplacement de l'axe du foret peut être réalisé par un actionneur commandé par le dispositif de perçage.

Le déplacement de l'axe du foret peut également être réalisé sous l'effet d'efforts générés par le perçage.

Dans une forme de réalisation illustrée sur la figure 5, le foret 30 est monté dans un fourreau 23 à trou excentré du porte outil 20, de sorte qu'une rotation d'un angle donné dudit fourreau dans un fût 24 dudit porte outil permet de modifier dans un repère lié à l'outil la position relative de l'axe 33 du foret et de l'axe 21 du porte outil.

La rotation du fourreau 23 peut être réalisée par un actionneur, non représenté, par exemple un actionneur électrique.

La rotation du fourreau 23 peut être réalisée, par exemple entre des butées fixes ou mobiles du fût 24, par des moyens élastiques sensibles au couple généré sur le foret par le perçage, couple qui est sensiblement plus élevé lors du perçage du titane que dans celui du matériau composite carbone. Les moyens élastiques ont par exemple la forme d'un ressort de rappel, prétendu, calibré pour être dans une position tendue lors du perçage du titane, sous l'effet d'un couple de perçage relativement fort, et pour être dans une position avec une tension réduite lors du perçage du matériau composite, du fait d'un couple de perçage relativement faible.

Dans une forme de réalisation, la première arête de coupe 31 et la deuxième arête de coupe 32 sont réalisées sur le foret pour être mise en oeuvre alternativement dans un perçage avec des sens de rotation inversés du foret.

Dans ce cas le fourreau 23, maintenant le foret 30, peut être monté libre en rotation dans le fût 24 dans entre deux butées angulaires, par exemple placées à 180 degrés d'écart angulaire, de sorte que le foret se positionne en rotation naturellement sur une ou l'autre des butées angulaires suivant le sens de rotation du porte outil 20.

Suivant cette forme de réalisation, le changement de l'arête de coupe travaillante est réalisé par une inversion du sens de rotation du foret pendant le perçage.

Il convient de remarquer que le dispositif et le procédé de l'invention peuvent être appliqués au perçage d'assemblages comportant en épaisseur plus de deux catégories de matériaux, en regard de leurs exigences de coupe.

Dans ce cas le foret comporte au moins une arête de coupe de caractéristiques différentes adaptées pour le perçage de chacun des matériaux, par exemple trois ou quatre arêtes de coupe.

Dans ce cas chaque arête de coupe détermine la direction dans laquelle doit être réalisé le déport entre le premier axe du porte outil, coïncidant avec l'axe de rotation, et l'axe de l'outil.

En pratique la nécessité de conserver une avance suffisante du foret pendant le perçage conduit à limiter le nombre d'arêtes de coupe.

Bien que ce nombre ne soit en théorie pas limité, il sera généralement considéré entre deux et quatre arêtes de coupe comme une limite pratique.

Dans une forme de réalisation le foret est avantageusement un foret à une goujure droite qui permet d'obtenir des états de surface de la paroi intérieure du trou réalisé de bonne qualité.

Le dispositif et le procédé de l'invention permettent de réaliser des perçages de qualité en une seule passe dans des assemblages mettant en oeuvre des matériaux dont les caractéristiques d'usinage différentes conduisent à des endommagements rapides des forets conventionnels.

En réalisant plus rapidement les perçages et avec des durées de vie augmentées des forets de perçage, les assemblages peuvent être réalisés à des coûts significativement abaissés.

## Revendications

1. Dispositif (200) de perçage comportant des moyens d'entraînement en rotation d'un porte outil (20) autour d'un premier axe (21) sur lequel porte outil est fixé un foret (30) d'axe (33), ledit foret comportant au moins une première arête de coupe (31) et une seconde arête de coupe (32) inclinées dans un plan axial du foret (30) de sorte à conférer audit foret une forme d'extrémité conique saillante, **caractérisé en ce que** :
- la première arête de coupe (31) est constituée pour le perçage d'un premier matériau ;
- la seconde arête de coupe (32) est constituée, différemment de la première arête de coupe (31) pour le perçage du second matériau ;
- le porte outil (20) maintien l'axe (33) du foret sur un second axe (22) dudit porte outil parallèle au premier axe (21) à une distance de déport D dudit premier axe, ledit foret étant fixé audit porte outil pour être entraîné en rotation à la vitesse de rotation dudit porte outil ;
- le porte outil (20) et le foret (30) comporte au moins deux positions distinctes du premier axe (22) par rapport à l'axe (33) du foret pour déporter latéralement ledit premier axe par rapport audit axe du foret dans une direction opposée à la première arête de coupe (31) dans une première position et pour déporter latéralement ledit premier axe par rapport audit axe du foret dans une direction opposée à la seconde arête de coupe (32) dans une deuxième position.

2. Dispositif suivant la revendication 1 dans lequel la première arête de coupe (31) et la seconde arête de coupe (32) sont inclinées dans un plan axial du foret (30) pour former chacune avec l'axe (33) du foret un angle compris entre 60 degrés et 45 degrés environ.

3. Dispositif suivant la revendication 1 ou la revendication 2 dans lequel chacune des au moins deux positions distinctes du premier axe (22) par rapport à l'axe (33) du foret correspond à un déport du premier axe compris entre 0,05 mm et 0,2 mm.

4. Dispositif suivant l'une des revendications précédentes dans lequel la première arête de coupe (31) est adaptée au perçage de métaux durs.

5. Dispositif suivant la revendication 4 dans lequel la première arête de coupe (31) est formée dans un carbure de tungstène adapté au perçage des alliages à base de titane.

6. Dispositif suivant l'une des revendications précédentes dans lequel la deuxième arête de coupe (32) est adaptée au perçage de matériaux abrasifs.

7. Dispositif suivant la revendication 6 dans lequel la deuxième arête de coupe (32) est formée dans un carbure de tungstène comportant du diamant, ou formée par une plaquette diamant rapportée sur l'outil (30), adapté au perçage des matériaux composites comportant des fibres de carbone.

8. Dispositif suivant l'une des revendications précédentes dans lequel le foret (30) comporte trois ou quatre arêtes de coupe et dans lequel le porte outil (20) et le foret (30) comportent des positions distinctes du premier axe (22) par rapport à l'axe (33) du foret pour déporter latéralement ledit premier axe par rapport audit axe du foret dans chacune des directions opposées aux directions de chacune des arêtes de coupe.

9. Dispositif suivant l'une des revendications précédentes dans lequel le porte outil (20) comporte un fourreau tournant (23) à trou excentré, mobile en rotation sur ledit porte outil autour du premier axe (31), dans lequel le forêt (30) est maintenu avec l'axe (33) dudit foret sur un second axe (22) dudit fourreau tournant, ledit second axe étant déporté par rapport audit premier axe de sorte qu'une rotation contrôlée du fourreau tournant dans un fût (24) du porte outil modifie la direction, dans un repère lié au foret (30), dans laquelle ledit premier axe est déporté par rapport audit axe du foret.

10. Procédé (300) de perçage d'un assemblage de pièces (11, 12) formant un empilage d'au moins deux matériaux, ayant des caractéristiques physiques nécessitant des conditions de perçage différentes, mettant en oeuvre un foret (30) avec un axe (33) du foret, ledit foret comportant au moins une première arête de coupe (31) et une seconde arête de coupe (32) inclinées dans un plan axial du foret (30) de sorte à conférer audit foret en rotation autour de son axe une forme d'extrémité conique saillante, **caractérisé en ce que** :
- la première arête de coupe (31) est constituée pour le perçage d'un premier matériau ;
- la seconde arête de coupe (32) est constituée, différemment de la première arête de coupe (31), pour le perçage du second matériau ;
et **caractérisé en ce que** :
- un premier axe (21) d'entraînement en rotation du foret (30) pendant le perçage est placé et maintenu déporté latéralement d'une distance de déport D par rapport à l'axe (33) du foret ;
- le premier axe (21) est déporté de la distance de déport D par rapport à l'axe (33) du foret dans une direction opposée à la première arête de coupe (31) lorsque le foret perce le premier matériau et alternativement ;
- le premier axe (21) est déporté de la distance de déport D par rapport à l'axe (33) du foret dans une direction opposée à la seconde arête de coupe (32) lorsque le foret perce le deuxième matériau.

11. Procédé de perçage suivant la revendication 10 dans lequel une avance, définie comme une progression du foret (30) par tour suivant la direction axiale du perçage, est limitée en fonction d'un angle formé par chaque arête de coupe par rapport à l'axe (33) du foret et de la distance de déport D de sorte qu'à un instant donné une seule arête de coupe procède à un enlèvement de matière pendant le perçage.

12. Procédé de perçage suivant la revendication 10 ou la revendication 11 dans lequel des paramètres de coupe, par exemple vitesse de rotation et avance du foret (30), sont modifiées lorsque la direction du déport D est modifiée pendant le perçage.

13. Procédé de perçage suivant l'une des revendications 10 à 12, mettant en oeuvre un foret (30) dans lequel les au moins une première arête de coupe (31) et une seconde arête de coupe (32) sont agencées sur le foret (30) pour réaliser un enlèvement de matière avec des sens de rotation inversés dudit foret, et dans lequel procédé le sens de rotation est inversé pendant le perçage en fonction de l'arête de coupe devant percer un matériau de l'empilage.

14. Procédé de perçage suivant l'une des revendications 10 à 13 dans lequel la direction dans laquelle le premier axe (21) est déporté de la distance de déport D par rapport à l'axe (33) du foret est déclenchée par une mesure de profondeur du perçage en cours.

15. Procédé de perçage suivant l'une des revendications 10 à 13 dans lequel la direction dans laquelle le premier axe (21) est déporté de la distance de déport D par rapport à l'axe (33) du foret est déclenchée par une mesure d'un effort sur le foret (30), par exemple un couple ou une puissance absorbée par un dispositif de perçage, pendant le perçage.

## Patentansprüche

1. Bohrvorrichtung (200) mit Mitteln zum Drehantrieb eines Werkzeughalters (20) um eine erste Achse (21), wobei am Werkzeughalter ein Bohrer (30) mit einer Achse (33) befestigt ist, wobei der Bohrer mindestens eine erste Schneidkante (31) und eine zweite Schneidkante (32) aufweist, die in einer axialen Ebene des Bohrers (30) so geneigt sind, dass sie dem Bohrer eine vorspringende konische Endform verleihen, wobei die erste Schneidkante (31) zum Bohren eines ersten Materials ausgebildet ist, **dadurch gekennzeichnet, dass**:
- die zweite Schneidkante (32) anders als die erste Schneidkante (31) zum Bohren des zweiten Materials ausgebildet ist;
- der Werkzeughalter (20) die Bohrerachse (33) auf einer zur ersten Achse (21) parallelen zweiten Achse (22) des Werkzeughalters in einem Versatzabstand D zur ersten Achse halten kann, wobei der Bohrer am Werkzeughalter befestigt ist, um mit der Drehzahl des Werkzeughalters gedreht zu werden;
- der Werkzeughalter (20) und der Bohrer (30) mindestens zwei verschiedene Positionen der ersten Achse (21) in Bezug auf die Bohrerachse (33) aufweisen, um in einer ersten Position die erste Achse in Bezug auf die Bohrerachse in einer zur ersten Schneidkante (31) entgegengesetzten Richtung seitlich zu versetzen und um in einer zweiten Position die erste Achse in Bezug auf die Bohrerachse in einer zur zweiten Schneidkante (32) entgegengesetzten Richtung seitlich zu versetzen.

2. Vorrichtung nach Anspruch 1, wobei die erste Schneidkante (31) und die zweite Schneidkante (32) in einer axialen Ebene des Bohrers (30) geneigt sind, um jeweils mit der Bohrerachse (33) einen Winkel zwischen etwa 60 Grad und etwa 45 Grad zu bilden.

3. Vorrichtung nach Anspruch 1 oder Anspruch 2, wobei jede der mindestens zwei verschiedenen Positionen der ersten Achse (21) in Bezug auf die Bohrerachse (33) einem Versatz der ersten Achse zwischen 0,05 mm und 0,2 mm entspricht.

4. Vorrichtung nach einem der vorangehenden Ansprüche, wobei die erste Schneidkante (31) zum Bohren von Hartmetallen geeignet ist.

5. Vorrichtung nach Anspruch 4, wobei die erste Schneidkante (31) aus einem Wolframkarbid ausgebildet ist, das zum Bohren von Legierungen auf Titanbasis geeignet ist.

6. Vorrichtung nach einem der vorangehenden Ansprüche, wobei die zweite Schneidkante (32) zum Bohren von abrasiven Materialien geeignet ist.

7. Vorrichtung nach Anspruch 6, wobei die zweite Schneidkante (32) aus einem diamanthaltigen Wolframkarbid ausgebildet ist oder durch ein am Werkzeug (30) angebrachtes Diamantplättchen, das zum Bohren von Verbundmaterialien mit Kohlenstofffasern geeignet ist, ausgebildet ist.

8. Vorrichtung nach einem der vorangehenden Ansprüche, wobei der Bohrer (30) drei oder vier Schneidkanten aufweist und wobei der Werkzeughalter (20) und der Bohrer (30) verschiedene Positionen der ersten Achse (21) in Bezug auf die Bohrerachse (33) aufweisen, um die erste Achse in Bezug auf die Bohrerachse in jeder der Richtungen, die den Richtungen jeder der Schneidkanten entgegengesetzt sind, seitlich zu versetzen.

9. Vorrichtung nach einem der vorangehenden Ansprüche, wobei der Werkzeughalter (20) ein drehbares Futter (23) mit exzentrischem Loch aufweist, das am Werkzeughalter um die erste Achse (21) drehbar ist, wobei das Futter (30) mit der Bohrerachse (33) auf einer zweiten Achse (22) des drehbaren Futters gehalten wird, wobei die zweite Achse in Bezug auf die erste Achse so versetzt ist, dass eine gesteuerte Drehung des drehbaren Futters in einem Schaft (24) des Werkzeughalters die Richtung in einem mit dem Bohrer (30) verbundenen Koordinatensystem, in der die erste Achse in Bezug auf die Bohrerachse versetzt ist, ändert.

10. Verfahren (300) zum Bohren einer Anordnung von Teilen (11, 12), die einen Stapel aus mindestens zwei Materialien bilden, die physikalische Eigenschaften aufweisen, die unterschiedliche Bohrbedingungen erfordern, unter Verwendung eines Bohrers (30) mit einer Bohrerachse (33), wobei der Bohrer mindestens eine erste Schneidkante (31) und eine zweite Schneidkante (32) aufweist, die in einer axialen Ebene des Bohrers (30) so geneigt sind, dass sie dem Bohrer bei Drehung um seine Achse eine vorspringende konische Endform verleihen, wobei die erste Schneidkante (31) zum Bohren eines ersten Materials ausgebildet ist, wobei eine erste Achse (21) zum Drehantrieb des Bohrers (30) während des Bohrens um einen Versatzabstand D in Bezug auf die Bohrerachse (33) seitlich versetzt positioniert und gehalten wird,
**dadurch gekennzeichnet, dass**:
- die zweite Schneidkante (32) anders als die erste Schneidkante (31) zum Bohren des zweiten Materials ausgebildet ist;
- die erste Achse (21) in einer zur ersten Schneidkante (31) entgegengesetzten Richtung um den Versatzabstand D in Bezug auf die Bohrerachse (33) versetzt ist, wenn der Bohrer das erste Material durchbohrt, und alternativ;
- die erste Achse (21) in einer zur zweiten Schneidkante (32) entgegengesetzten Richtung um den Versatzabstand D in Bezug auf die Bohrerachse (33) versetzt ist, wenn der Bohrer das zweite Material durchbohrt.

11. Bohrverfahren nach Anspruch 10, wobei ein Vorschub, der als ein Fortschritt des Bohrers (30) pro Umdrehung in der axialen Bohrrichtung definiert ist, in Abhängigkeit von einem Winkel, den jede Schneidkante in Bezug auf die Bohrerachse (33) bildet, und vom Versatzabstand D begrenzt wird, so dass zu einem gegebenen Zeitpunkt während des Bohrens nur eine Schneidkante einen Materialabtrag vornimmt.

12. Bohrverfahren nach Anspruch 10 oder Anspruch 11, wobei Schneidparameter, beispielsweise die Drehzahl und der Vorschub des Bohrers (30), geändert werden, wenn die Richtung des Versatzes D während des Bohrens geändert wird.

13. Bohrverfahren nach einem der Ansprüche 10 bis 12 unter Verwendung eines Bohrers (30), bei dem die mindestens eine erste Schneidkante (31) und eine zweite Schneidkante (32) am Bohrer (30) angeordnet sind, um einen Materialabtrag mit umgekehrten Drehrichtungen des Bohrers vorzunehmen, und wobei bei dem Verfahren die Drehrichtung während des Bohrens in Abhängigkeit von der Schneidkante, die ein Material des Stapels durchbohren soll, umgekehrt wird.

14. Bohrverfahren nach einem der Ansprüche 10 bis 13 wobei die Richtung, in der die erste Achse (21) um den Versatzabstand D in Bezug auf die Bohrerachse (33) versetzt ist, durch eine Tiefenmessung der laufenden Bohrung ausgelöst wird.

15. Bohrverfahren nach einem der Ansprüche 10 bis 13, wobei die Richtung, in der die erste Achse (21) um den Versatzabstand D in Bezug auf die Bohrerachse (33) versetzt ist, durch eine Messung einer Kraft auf den Bohrer (30), beispielsweise eines Drehmoments oder einer Leistungsaufnahme durch eine Bohrvorrichtung, während des Bohrens ausgelöst wird.

## Claims

1. Drilling device (200) comprising means for driving a tool-holder (20) in rotation about a first axis (21), to which tool-holder is fixed a drill bit (30) of axis (33), said drill bit comprising at least one first cutting edge (31) and one second cutting edge (32) that are inclined in an axial plane of the drill bit (30) so as to confer on said drill bit a protruding conical end form, the first cutting edge (31) being made for the drilling of a first material,
**characterized in that**:
- the second cutting edge (32) is made, differently from the first cutting edge (31), for the drilling of the second material;
- the tool-holder (20) can keep the axis (33) of the drill bit on a second axis (22) of said tool-holder parallel to the first axis (21) at an offset distance D from said first axis, said drill bit being fixed to said tool-holder to be driven in rotation at the speed of rotation of said tool-holder;
- the tool-holder (20) and the drill bit (30) comprise at least two distinct positions of the first axis (21) with respect to the axis (33) of the drill bit to laterally offset said first axis with respect to said axis of the drill bit in a direction opposite to the first cutting edge (31) into a first position and to laterally offset said first axis with respect to said axis of the drill bit in a direction opposite to the second cutting edge (32) into a second position.

2. Device according to Claim 1, wherein the first cutting edge (31) and the second cutting edge (32) are inclined in an axial plane of the drill bit (30) to each form, with the axis (33) of the drill bit, an angle of between approximately 60 degrees and 45 degrees.

3. Device according to Claim 1 or Claim 2, wherein each of the at least two distinct positions of the first axis (21) with respect to the axis (33) of the drill bit corresponds to an offset of the first axis of between 0.05 mm and 0.2 mm.

4. Device according to one of the preceding claims, wherein the first cutting edge (31) is suitable for drilling hard metals.

5. Device according to Claim 4, wherein the first cutting edge (31) is formed in a tungsten carbide suitable for drilling titanium-based alloys.

6. Device according to one of the preceding claims, wherein the second cutting edge (32) is suitable for drilling abrasive materials.

7. Device according to Claim 6, wherein the second cutting edge (32) is formed in a tungsten carbide comprising diamond, or formed by a diamond wafer added to the tool (30), suitable for drilling composite materials comprising carbon fibres.

8. Device according to one of the preceding claims, wherein the drill bit (30) comprises three or four cutting edges and wherein the tool-holder (20) and the drill bit (30) comprise distinct positions of the first axis (21) with respect to the axis (33) of the drill bit to laterally offset said first axis with respect to said axis of the drill bit in each of the directions opposite to the directions of each of the cutting edges.

9. Device according to one of the preceding claims, wherein the tool-holder (20) comprises a revolving sheath (23) with an off-centre hole, movable in rotation on said tool-holder about the first axis (21), wherein the drill bit (30) is maintained with the axis (33) of said drill bit on a second axis (22) of said revolving sheath, said second axis being offset with respect to said first axis such that a controlled rotation of the revolving sheath in a stock (24) of the tool-holder modifies the direction, in a reference frame linked to the drill bit (30), in which said first axis is offset with respect to said axis of the drill bit.

10. Method (300) for drilling an assembly of parts (11, 12) forming a stack of at least two materials, having physical characteristics requiring different drilling conditions, implementing a drill bit (30) with an axis (33) of the drill bit, said drill bit comprising at least one first cutting edge (31) and one second cutting edge (32) that are inclined in an axial plane of the drill bit (30) so as to confer on said drill bit, in rotation about its axis, a protruding conical end form, the first cutting edge (31) being made for the drilling of a first material, a first axis (21) for driving the drill bit (30) in rotation during the drilling being placed and maintained laterally offset by an offset distance D with respect to the axis (33) of the drill bit,
**characterized in that**:
- the second cutting edge (32) is made, differently from the first cutting edge (31), for the drilling of the second material;
- the first axis (21) is offset by the offset distance D with respect to the axis (33) of the drill bit in a direction opposite to the first cutting edge (31) when the drill bit drills the first material and, alternatively,
- the first axis (21) is offset by the offset distance D with respect to the axis (33) of the drill bit in a direction opposite to the second cutting edge (32) when the drill bit drills the second material.

11. Drilling method according to Claim 10, wherein an advance, defined as a progression of the drill bit (30) per revolution in the axial direction of the drilling, is limited according to an angle formed by each cutting edge with respect to the axis (33) of the drill bit and the offset distance D such that, at a given instant, a single cutting edge proceeds with the removal of material during the drilling.

12. Drilling method according to Claim 10 or Claim 11, wherein the cutting parameters, for example speed of rotation and advance of the drill bit (30), are modified when the direction of the offset D is modified during the drilling.

13. Drilling method according to one of Claims 10 to 12, implementing a drill bit (30), wherein the at least one first cutting edge (31) and one second cutting edge (32) are arranged on the drill bit (30) to perform a removal of material with reversed directions of rotation of said drill bit, and in which method the direction of rotation is reversed during the drilling according to the cutting edge required to drill a material of the stack.

14. Drilling method according to one of Claims 10 to 13, wherein the direction in which the first axis (21) is offset by the offset distance D with respect to the axis (33) of the drill bit is triggered by a measurement of depth of the current drilling.

15. Drilling method according to one of Claims 10 to 13, wherein the direction in which the first axis (21) is offset by the offset distance D with respect to the axis (33) of the drill bit is triggered by a measurement of a force on the drill bit (30), for example a torque or a power absorbed by a drilling device, during the drilling.
